**Europäisches Patentamt**

**European Patent Office**

**Office européen des brevets**

(19)

(11) Veröffentlichungsnummer: **0 019 040**

**A1**

(12) # EUROPÄISCHE PATENTANMELDUNG

(21) Anmeldenummer: 80101032.3

(22) Anmeldetag: 03.03.80

(51) Int. Cl.³: **C 08 J 3/24**
**C 08 L 61/24**
**//C08K3/30**

(30) Priorität: 31.03.79 DE 2912962

(43) Veröffentlichungstag der Anmeldung:
26.11.80 Patentblatt 80 24

(84) Benannte Vertragsstaaten:
AT CH DE FR GB IT SE

(71) Anmelder: DYNAMIT NOBEL AKTIENGESELLSCHAFT
Patentabteilung Postfach 1209
D-5210 Troisdorf, Bez. Köln(DE)

(72) Erfinder: Bruncken, Klaus, Dr.
Kiefernstrasse 12
D-5210 Troisdorf-Oberlar(DE)

(54) Verfahren zum Härten von Harnstoffharz-Formmassen und Harnstoffharz-Formmassen.

(57) Die vorliegende Erfindung behandelt das Aushärten von Harnstoffharz-Preßmassen. Die Massen können sowohl in Preßwerkzeugen als auch in Spritzgießautomaten zu Formteilen verarbeitet werden. Erfindungsgemäß wird den Massen Zinksulfamat als Härtungsmittel hinzugegeben, das den Massen eine verbesserte Fließfähigkeit und Lagerbeständigkeit verleiht. Aus der anliegenden Figur ist die Spritzgußqualität anmeldegemäßer Massen (1-3) in Vergleich zu einer herkömmlichen, Caprolactam enthaltenden Masse (4) ersichtlich. Die anmeldegemäßen Massen (1-3) besitzen eine weichere Konsistenz und sind länger plastisch verformbar als die genannte herkömmlich plastisch verformbare Spritzgußmasse (4).

Figur 1

BEZEICHNUNG GEÄNDERT
siehe Titelseite

- 1 -

Troisdorf, den 30.3.1979
OZ:79021  (2953) Dr.Sk/Sch

DYNAMIT NOBEL AKTIENGESELLSCHAFT
Troisdorf, Bez. Köln

Verfahren zum Härten von Harnstoffharz-Formmassen

Gegenstand der vorliegenden Erfindung ist ein Verfahren zum Härten von Harnstoffharz-Formmassen unter Verwendung von Zinksalzen als Härtungsbeschleuniger.

Harnstoffharz-Formmassen sind hitzehärtbare Formmassen. Ihre Aushärtung erfolgt bei Preßtemperaturen, die im allgemeinen zwischen 135 und 160 $^{\circ}$C liegen. Der zur Härtung eingesetzte Härtungsbeschleuniger soll bei diesen Temperaturen den pH-Wert der Masse auf Werte unter 7,0 herabsetzen. Weiterhin soll der Härtungsbeschleuniger aber auch so thermostabil sein, daß er erst oberhalb von 80 $^{\circ}$C, vorzugsweise erst oberhalb 100 $^{\circ}$C, eine saure Reaktion zeigt, damit die Reaktionsfähigkeit des Harzes während der Trocknung der Preßmasse erhalten bleibt. Die Trocknungszeit beträgt oft mehrere Stunden, wobei Temperaturen zwischen 60 und 90 $^{\circ}$C angewendet werden.

Es sind zwar bereits aus der DE-PS 25 44 182 Härtungs-

- 2 -

beschleuniger für Harnstoffharzmassen bekannt, die eine gewisse Thermostabilität im oben genannten Sinne besitzen. Diese Massen zeigen jedoch nach einer Lagerung bei 50 °C über vier Tage, wie sie in tropischen Ländern oft auftritt, bereits einen ungewünscht hohen Fließwegabfall; dies bedeutet, daß diese Härter auch bereits bei diesen Temperaturen einen gewissen Härtungseffekt zeigen und demzufolge bereits bei Temperaturen oberhalb 50 °C eine ungenügende Lagerstabilität aufweisen.

Es bestand demzufolge die Aufgabe, Harnstoffharz-Preßmassen herzustellen, die eine verbesserte Fließfähigkeit bei Preßtemperaturen zeigen und eine bessere Lagerbeständigkeit besitzen als die bisher bekannten Harnstoffharz-Preßmassen. Gleichzeitig sollen die Massen aber auch bei Preßtemperaturen schnell aushärten und die in der DIN 7708 vorgeschriebenen Mindestwerte für Biegefestigkeit, Schlagzähigkeit, Kerbschlagzähigkeit und Temperaturbeständigkeit nach Martens erfüllen und geringe Schwindungswerte zeigen.

In Erfüllung dieser Aufgabe wurde nun ein Verfahren zum Härten von Harnstoffharz-Formmassen gefunden, das dadurch gekennzeichnet ist, daß man als Härter Zinksulfamat einsetzt.

Weiterer Gegenstand der vorliegenden Erfindung sind demzufolge auch Harnstoffharz-Formmassen, die Zinksulfamat als Härtungsbeschleuniger enthalten.

Die erfindungsgemäßen Massen zeigen neben einer verbesserten Fließfähigkeit und Lagerbeständigkeit gegenüber den in der DE-PS 25 44 182 beschriebenen Massen auch noch überraschenderweise verbesserte Spritzgießeigenschaften gegenüber diesen bekannten Massen. Das Spritzgießen von Harnstoffharz-Formmassen erfolgt bevorzugt im Temperaturbereich zwischen 90 und 120 °C; in diesem Temperaturbereich ist die Masse bereits unter Druck plastisch verformbar; jedoch ist die Wirkung des mehr oder weniger latenten Härtungsbeschleunigers noch so gering, daß die vollständige Ausfüllung der Form möglich ist, bevor die Fließfähigkeit der Masse zu weit nachgelassen hat. Die erfindungsgemäßen Massen erweichen dabei zu einer niedrigeren Konsistenz als eine herkömmliche spritzgießfähige Harnstoffharz-Formmasse, wobei diese niedrigere Konsistenz auch noch länger als bei diesen bekannten Massen erhalten bleibt.

Die neuen Massen zeigen Werte für Biegefestigkeit, Schlagzähigkeit, Kerbschlagzähigkeit und Temperaturbeständigkeit nach Martens, die die Mindestanforderungen gemäß DIN 7708 noch übertreffen, sowie ausgesprochen niedrige Werte der Verarbeitungsschwindung und Nachschwindung, die ebenfalls gemäß DIN 7708 gemessen werden.

Die Menge des Zinksulfamats, das als Härter hinzugefügt wird, liegt zwischen 0,1 und 2,5 Gew.-%, bezogen auf den Harnstoffharzgehalt der Formmasse. Das Zinksulfamat wird zweckmäßigerweise durch Umsetzung von Zinkoxid mit Amidosulfonsäure in wässriger Lösung hergestellt, wobei man diese Lösung direkt einsetzen kann. Das Zinksulfamat kann jedoch auch auf andere, an sich bekannte Weise, hergestellt werden.

Die als Ausgangssubstanz für die auszuhärtenden Formmassen eingesetzten Harnstoffharze werden auf an sich bekannte Weise durch Kondensation von Harnstoff mit Formaldehyd in wässriger Lösung hergestellt. Das Molverhältnis von Harnstoff: Formaldehyd soll zwischen 1:1,25 und 1:1,75 liegen; die Kondensation wird bei Temperaturen zwischen 40 und 80 °C und einem pH-Wert zwischen 6,0 und 8,0 durchgeführt.

Als Formaldehyd- und Harnstoffkomponente kann auch ein Vorkondensat aus Harnstoff und Formaldehyd verwendet werden, das zwischen 50 und 60 Gew.-% Harnstoff und 20 und 30 Gew.-% Formaldehyd enthält und als wässrige Lösung eingesetzt wird. Zur Einstellung des gewünschten Harnstoff-Formaldehydverhältnisses und der gewünschten Harzkonzentration werden diesem Vorkondensat noch die entsprechenden Mengen Harnstoff und wässrige Formaldehydlösung hinzugefügt. Anschließend wird dann kondensiert.

Unter den erfindungsgemäßen Harnstoffharzen sollen auch solche Harze verstanden werden, die durch Melamin oder andere Harnstoffderivate modifiziert sind. Dabei wird unter den gleichen Bedingungen wie oben angegeben, kondensiert; für den Melaminanteil werden jedoch zusätzlich noch 2-4 Mol Formaldehyd pro Mol Melamin eingesetzt. Die Melaminmenge kann zwischen 0 und 0,5 Mol, bezogen auf 1 Mol Harnstoff, betragen.

Anschließend an die Kondensation wird die erhaltene Harzlösung durch Abdestillieren von Wasser im Vakuum auf einen Harzgehalt von etwa 50 Gew.-%, entsprechend einem spezifischen Gewicht von etwa 1,2 eingeengt. Beim Einsatz von Vorkondensaten kann gegebenenfalls bei der Kondensation ein Harz mit dem gewünschten spezifischen Gewicht und Konzentration direkt erhalten werden, so daß die Abdestillation von überschüssigem Wasser entfallen kann.

Zur Herstellung der erfindungsgemäßen Formmassen werden diesen wässrigen Harzlösungen Füllstoffe und sonstige Zuschlagstoffe sowie der Härter untergemischt.

Als Füllstoffe können mineralische oder organische Stoffe, bevorzugt in Faserform, verwendet werden. Bevorzugter Füllstoff ist Cellulose, die nach Möglichkeit gebleicht sein soll, weil sich dann die erhaltenen Massen zu beliebigen hellen und bunten Tönen einfärben lassen. Als Cellulose eignet sich z.B. Zellwolle oder Holzmehl. Auch anderes, cellulosehaltiges Material kann verwendet werden.

Zu den sonstigen Zuschlagstoffen zählen an sich bekannte Gleitmittel, Weichmacher und gegebenenfalls Pigmente.

Die Menge der Füllstoffe wird so bemessen, daß auf 50 bis 70 Gew.-Teile Festharz, angewendet als 50 %ige wässrige Lösung, 25 bis 35 Gew.-Teile der Füllstoffe entfallen, so daß die fertige Masse einen Festharzgehalt von etwa 55 bis 70 % besitzt. Weichmacher und Gleitmittel sind in den fertigen Massen bevorzugt zu etwa 1 Gew.-Teil enthalten, wobei der Anteil der Weichmacher zwischen 0 und 10 Gew.-% und derjenige der Gleitmittel zwischen 0,5 und 1 Gew.-%, bezogen auf die Formmasse, schwanken kann.

Nach dem Untermischen von Füllstoffen, Härtungsmitteln und den sonstigen Zuschlagstoffen, das auf an sich bekannte Weise, z.B. durch Kneten erfolgt, wird die Masse getrocknet, bevorzugt mit Warmluft bei Temperaturen bis zu 80 °C. Das erhaltene Produkt wird gemahlen und kann dann bereits direkt als Preßmasse eingesetzt werden. Im allgemeinen erfolgt dann jedoch noch eine Granulierung, um gut rieselfähige Produkte zu erhalten. Die Granulate werden auf Preß-, Spritzpreß- oder Spritzgießwerkzeugen in bekannter Weise zu Formteilen verarbeitet.

Beispiel 1

8,2 kg einer 45 °C warmen 55 %igen Harzlösung welche aus Harnstoff, Melamin und Formaldehyd im Molverhältnis 1:0,04:1,5 wie oben beschrieben hergestellt wurde, wird mit einer aus 85,7 g Amidosulfonsäure und 31,5 g Zinkoxid in 160 g Wasser bereiteten Lösung von Zinksulfamat, 115 g Zinkstearat, 300 g Lithopone und 2150 g Zellstoffschnitzeln (Trockensubstanz) eine halbe Stunde lang geknetet und dann 5 Stunden lang bei 80 °C im Umlufttrockenschrank getrocknet. Das Trockengut wird auf einer Turbomühle vorgemahlen und danach in einer Kugelmühle feingemahlen, verdichtet und granuliert.

- 6 -

Die Masse zeigt hohe Fließfähigkeit, gute Spritzgießqualität und hohe Lagerbeständigkeit.

Beispiel 2

3500 g Harnstoff und 6620 g einer 37 %igen wässrigen
Formaldehydlösung werden entsprechend einem Molverhältnis
1:1,4, bei 50 $^\circ$C und pH 7,3, eingestellt mit Magnesiumcarbonat, 30 Minuten lang kondensiert. Dann wird im Vakuum
bei 55 $^\circ$C so viel Wasser abdestilliert, daß das spezifische
Gewicht der Lösung 1,195 beträgt. Die Harzlösung wird mit
einer aus 104 g Amidosulfonsäure und 38,3 g Zinksulfamat,
115 g Zinkstearat, 3oo g Lithopone und 2150 g Zellstoffschnitzeln (Trockensubstanz) wie in Beispiel 1 zu Preßmassegranulat verarbeitet.

Die Masse zeigt hohe Fließfähigkeit, gute Spritzgießqualität und hohe Lagerbeständigkeit.

Beispiel 3

Eine wie in Beispiel 2 hergestellte Harzlösung wird mit
einer aus 45 g Amidosulfonsäure und 17 g Zinkoxid in 80 g
Wasser bereiteten Lösung von Zinksulfamat, 57,7 g Zinkstearat, 57,7 g eines handelsüblichen Polyäthylenglycols,
300 g Lithopone und 2150 g Zellstoffschnitzeln (Trockensubstanz) wie in Beispiel 1 zu Preßmassegranulat verarbeitet.

Die Masse zeigt hohe Fließfähigkeit, gute Spritzgießqualität und hohe Lagerbeständigkeit.

Von den Massen der Beispiele 1 bis 3 wird der Fließweg
und die Spritzgießqualität bestimmt und mit Massen entsprechend der DE-PS 22 40 677 (Nr. 4) und der DE-PS
25 44 182 verglichen.

Zur Bestimmung des Fließweges wird ein handelsübliches Fließprüfgerät, Bauart Zwick & Co., verwendet. Die Prüfung erfolgt mit 0,9 g schweren Tabletten bei einer Temperatur von 156 $^{\circ}$C und einem Druck von 75 kp/cm$^2$ mit Fließkanal von 3,2 mm Durchmesser. In der Tabelle 1 ist der Fließweg, gemessen in Millimetern und die dafür erforderliche Fließzeit, gemessen in Sekunden, direkt nach der Massenherstellung und nach einer Lagerzeit der Masse von 4 Tagen bei 50 $^{\circ}$C angegeben.

### Tabelle 1

|  | Beispiel | | | Vergleich | |
|---|---|---|---|---|---|
|  | 1 | 2 | 3 | Nr.4 | Nr.5 |
| Fluß (ungelagert, mm/sec) | 74/9 | 74/10 | 73/9 | 72/18 | 51/19 |
| Fluß nach 4 d/50$^{\circ}$C (mm/sec) | 74/18 | 74/20 | 73/18 | 33/22 | 5/30 |
| Fließwegabfall nach 4 d/ 50$^{\circ}$C (in %) | 0 | 0 | 0 | 54 | 92 |

Die Spritzgießqualität wird mit Hilfe eines Brabender-Plastographen - Typ Plast-Corder - beurteilt. Es wurde mit der Kammer MB 30 geprüft; als Einwaage dienten jeweils 24 g. Die weiteren Versuchsbedingungen waren folgende:

Knetertemperatur: 115 $^{\circ}$C      Drehzahl: 30 Upm
Meßbereich: 1:5      Dämpfung: 6
Papiervorschub: 1 cm/min.

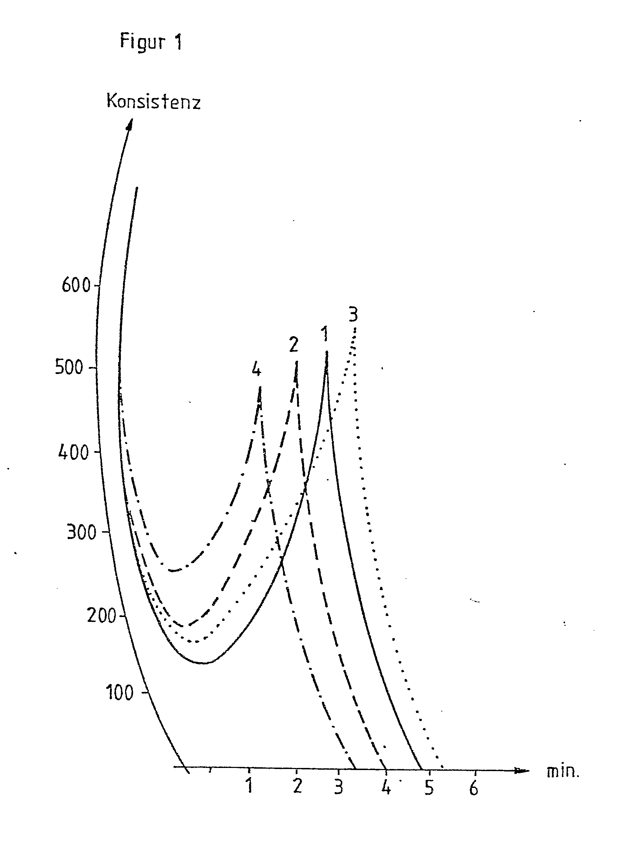

Die Ergebnisse sind in der beigefügten Figur ersichtlich. Die Kurven 1 bis 3 entsprechen den Beispielen 1 bis 3. Die Kurve 4 wurde mit einer Formmasse erhalten, die entsprechend der DE-PS 22 40 677 hergestellt wurde. Die Kurven zeigen, daß die erfindungsgemäßen Massen eine weichere Konsistenz besitzen und länger plastisch verformbar bleiben als Harnstoff-Spritzgußmassen, die entsprechend der DE-PS 22 40 677 Caprolactam zur Verbesserung der Fließfähigkeit enthalten.

- 1 -

Patentansprüche:

1. Verfahren zum Härten von Harnstoffharz-Formmassen durch Einwirkung von Druck und Hitze in Gegenwart von Zinksalzen, d a d u r c h   g e k e n n z e i c h n e t , daß als Zinksalz Zinksulfamat eingesetzt wird.

2. Harnstoffharz-Formmasse auf Basis von basischen Kondensationsprodukten von Harnstoff und Formaldehyd und cellulosehaltigem Füllstoff, gekennzeichnet durch einen Gehalt von 0,1 bis 2,5 Gew.-%, bezogen auf das Harnstoffharz, an Zinksulfamat.

3. Harnstoffharz-Formmassen gemäß Anspruch 2, dadurch gekennzeichnet, daß bei deren Herstellung bis zu 0,5 Mol Melamin pro Mol Harnstoff eingesetzt wurden.

1/1

Figur 1

Europäisches
Patentamt

# EUROPÄISCHER RECHERCHENBERICHT

Nummer der Anmeldung

EP 80101032.3

| | EINSCHLÄGIGE DOKUMENTE | | KLASSIFIKATION DER ANMELDUNG (Int.Cl ³) |
|---|---|---|---|
| Kategorie | Kennzeichnung des Dokuments mit Angabe soweit erforderlich, der maßgeblichen Teile | betrifft Anspruch | |
| X | GB - A - 1 027 725 (IMPERIAL CHEMICAL INDUSTRIES OF AUSTRALIA AND NEW ZEALAND LIMITED) <br><br> + Gesamt; insbesonders Beispiel 7, Tabelle 2 + <br><br> -- | 1,2 | C 08 J 3/24 <br> C 08 L 61/24// <br> (C 08 K 3/30) |
| | GB - A - 875 945 (IMPERIAL CHEMICAL INDUSTRIES OF AUSTRALIA AND NEW ZEALAND LIMITED) <br><br> + Beispiel; Ansprüche + <br><br> ---- | 1,2 | |

**RECHERCHIERTE SACHGEBIETE (Int. Cl. ³)**

C 08 J

C 08 L 61/00

C 08 K

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 23-05-1980 | PAMMINGER |

EPA form 1503.1  06.78